# EUROPEAN PATENT APPLICATION

(11) **EP 3 284 525 A1**
(43) Date of publication of application: **21.02.2018**
(21) Application number: 17153853.1
(22) Date of filing: 30.01.2017
(51) Int. Cl.: B01D 9/00, C02F 1/22, C02F 1/52

(54) **CRYSTALLIZER AND METHOD FOR TREATING PRODUCED WATER**

(30) Priority: 16.08.2016 US 201615238320
(71) Applicant: Linde Aktiengesellschaft, 80331 München (DE)
(72) Inventor: ASLAM, Naveed, Houston, TX Texas 77030 (US)
(74) Representative: Hofmann, Andreas

(57) **Abstract**

In order to overcome the limitations and problems that earlier apparatus and methods have experienced, a crystallizer and a method for treating produced water are proposed, said method comprising the steps of:
a) feeding (4) produced water to a porous pipe (G) in a chamber (C) wherein the chamber (C) is cylindrically shaped having an interior wall with a top and a bottom;
b) feeding gaseous nitrogen (GAN) to a nozzle (D) present in the chamber (C), wherein the nozzle (D) is in fluid communication with an interior pipe (F);
c) feeding the produced water to the interior pipe (F) wherein slush is formed in the interior pipe (F) and this slush is forced through the interior pipe (F) to the top of the chamber (C);
d) operating at least one scraper (E) which is mounted circumferentially about the porous pipe (G) and has arms that extend outwardly from the scraper (E) center in contact with the interior wall of the chamber (C) wherein the scraper (E) will contact and remove salt crystals from the interior walls of the chamber (C);
e) recovering salts, in particular salt crystals, from the bottom of the chamber (C); and
f) recovering fresh water from the chamber (C).

## Description

### Technical field of the present invention

The present invention relates to a crystallizer and to a method for treating produced water.

### Technological background of the present invention

Hydraulic fracturing is becoming a desirable method for extracting hydrocarbons. However, this method is being given scrutiny by public and regulatory agencies due to their extensive requirement for and consumption of water.

This problem is exacerbated, for example in certain regions of the United States, because there is a water shortage to contend with. For example the Permian Basin in Texas is one such area so there is a continuous need for methods that use water more efficiently in the hydraulic fracturing operations.

Typically the produced water that is recovered is characterized by unusually high percentages of dissolved solids (TDS) in the range of 50,000 p[arts]p[er]m[illion] to 600,000 p[arts]p[er]m[illion] which makes these types of water not suitable for reverse osmosis units. Evaporative crystallization (EC) technologies are also not desirable due to their low efficiencies due to the heat of evaporation of water.

### Disclosure of the present invention: object, solution, advantages

Starting from the disadvantages and shortcomings as described above as well as taking the prior art as discussed into account, an object of the present invention is to overcome the limitations and problems that earlier apparatus and methods have experienced.

This object is accomplished by a crystallizer comprising the features of claim 1 as well as by a method comprising the features of claim 6. Advantageous embodiments, expedient improvements and other optional features of the present invention are set forth herein and disclosed in the respective dependent claims.

The present invention basically provides for a crystallizer and method for water reclamation, more particularly for a liquid nitrogen (LIN) based crystallizer and its use in reclaiming water from oil and gas produced water streams.

More particularly, the present invention provides for a crystallizer for treatment of produced water from oil and gas production processes, and a method of using the crystallizer for treating produced water from oil and gas production processes.

In a first embodiment of the present invention, there is disclosed a crystallizer comprising a chamber being cylindrical in shape and comprising an interior wall and a top and a bottom, the chamber being in fluid communication with a pipe for introducing produced water, the pipe is in fluid communication with a porous pipe to allow for distribution of the produced water through the interior of the chamber; a source of gaseous nitrogen (GAN) in fluid communication with a nozzle wherein the nozzle is located inside the chamber and is in fluid communication with an interior pipe which is further in fluid communication with the produced water; at least one scraper which is mounted circumferentially about the porous pipe and having arms that extend outwardly from the scraper center in contact with the interior wall of the chamber thereby scraping salt crystals on the interior wall of the chamber; and a top pipe in fluid communication with the chamber thereby to remove fresh water from the chamber.

According to an advantageous embodiment of the present invention, the produced water may be from an oil and gas production process.

In an expedient embodiment of the present invention, the gaseous nitrogen (GAN) may be formed by feeding liquid nitrogen (LIN) to a fluid temperature control system.

According to a favoured embodiment of the present invention, gaseous nitrogen (GAN) may be recovered from the chamber.

In a preferred embodiment of the present invention, the gaseous nitrogen (GAN) may be fed to the fluid temperature control system.

According to an advantageous embodiment of the present invention, the porous pipe may distribute the produced water throughout the chamber.

In an expedient embodiment of the present invention, the nozzle may feed the produced water and gaseous nitrogen (GAN) to the interior pipe.

According to a favoured embodiment of the present invention, slush or ice crystals may be formed in the interior pipe.

In a preferred embodiment of the present invention, the scraper may be operated periodically.

According to an advantageous embodiment of the present invention, the scraper may rotate between 0 degree and 180 degree.

In an expedient embodiment of the present invention, salts removal means from the bottom of the chamber may be provided.

In a second embodiment of the present invention, there is disclosed a method for treating produced water, comprising the steps of:
a) feeding produced water to a porous pipe in a chamber wherein the chamber is cylindrically shaped having an interior wall with a top and a bottom;
b) feeding gaseous nitrogen to a nozzle present in the chamber, wherein the nozzle is in fluid communication with an interior pipe;
c) feeding the produced water to the interior pipe wherein slush is formed in the pipe and this slush is forced through the interior pipe to the top of the chamber;
d) operating at least one scraper which is mounted circumferentially about the porous pipe and having arms that extend outwardly from the scraper center in contact with the interior wall of the chamber wherein the scraper will contact and remove salt crystals from the interior walls of the chamber;
e) recovering salt crystals from the bottom of the chamber; and
f) recovering fresh water from the chamber.

According to an advantageous embodiment of the present invention, the produced water may be from an oil and gas production process.

In an expedient embodiment of the present invention, the gaseous nitrogen (GAN) may be formed by feeding liquid nitrogen (LIN) to a fluid temperature control system.

According to a favoured embodiment of the present invention, gaseous nitrogen (GAN) may be recovered from the chamber.

In a preferred embodiment of the present invention, the gaseous nitrogen (GAN) may be fed to the fluid temperature control system.

According to an advantageous embodiment of the present invention, the porous pipe may distribute the produced water throughout the chamber.

In an expedient embodiment of the present invention, the nozzle may feed the produced water and gaseous nitrogen (GAN) to the interior pipe.

According to a favoured embodiment of the present invention, slush or ice crystals may be formed in the interior pipe.

In a preferred embodiment of the present invention, the scraper may be operated periodically.

According to an advantageous embodiment of the present invention, the scraper may rotate between 0 degree and 180 degree.

In an expedient embodiment of the present invention, salts may be removed from the bottom of the chamber.

According to a favoured embodiment of the present invention, the fresh water may be recovered from the chamber through a top pipe.

The gaseous nitrogen is typically formed by feeding liquid nitrogen to a fluid temperature control system which can cool process fluids while reducing the risk of freezing.

The gaseous nitrogen is also recovered from the chamber after it has flowed to the top of the chamber and this recovered nitrogen can be fed to the fluid temperature control system to provide some heat exchange before being fed into the chamber.

The produced water is fed to a porous pipe which can be any pipe constructed in a manner to allow for the distribution of the produced water throughout the chamber.

The nozzle will feed both the gaseous nitrogen and the produced water to the pipe present in the chamber. The interaction of the gas and produced water will produce slush or ice crystals which will flow upwards through the pipe to the top of the chamber where the slush or ice crystals will be recovered as fresh water and removed from the chamber.

Depending upon the throughput of the crystallizer, the flow rates for the gases will vary. The liquid nitrogen flow is directly dependent upon the cooling duty for the crystallizer whether it is a size of 18.93 litres per minute (= of five gallon per minute) or larger.

The produced water achieves supersaturation as it enters the crystallizer and the ice solubility limits of -4°C to -10°C are reached. Ice crystals will then start forming and the solution will advance temperature wise to the eutectic point. At the eutectic point, salt will start coming out of the produced water.

The scraper is a device that is mounted circumferentially about the porous pipe. The scraper has arms that extend outwards from its center and contact the interior walls of the chamber. The scraper will be operated periodically and rotated between 0 degree and 180 degree so that the arms will contact any salts that have formed on the interior walls of the chamber. These salts will then drop to the bottom of the chamber where they can be recovered in solution from the bottom of the chamber and used accordingly.

The scraper is typically driven by an electric motor or through exhaust gaseous nitrogen. The scraper will contact and clean the internal surface of the crystallizer to remove salt deposition that can occur. This keeps the surface of the crystallizer clean thereby improving thermal efficiency of the operation as well as improving the yield of salt.

The various components of the crystallizer unit could be made from plastics or polymeric materials or ordinary steel coated with fluoro polymers. Since this is a low temperature design for water reclamation there is little likelihood of scaling and fouling effects and therefore the unit does not require more expensive material further lowering the overall capital expenditures (CapEx) for the unit.

The nozzle is typically designed to avoid clogging while rapidly cooling and assisting in the crystallization of ice crystals from the water feed through the expansion of liquid nitrogen (LIN).

Previous attempts at commercialization of indirect crystallizers to treat high total dissolved solids water were less successful due to the high capital expenditures (CapEx) and operating expenditures (OpEx) involved in the separation of ice and salt crystals as well as the cooling loop and refrigerant compressor design.

The present invention avoids these difficulties because the separation of ice and salt is performed in the same unit using the same fluid thereby lowering capital expenditures (CapEx) and operating expenditures (OpEx) by intensifying energy but also mass exchange in one unit.

Further the crystallizer of the present invention has a lower energy requirement compared to distillation or evaporative crystallizers as the latent heat of fusion of ice is only one seventh that of the latent heat of vaporization.

The lower operating temperatures further result in minimizing scaling and corrosion effects from the water present in the crystallizer chamber. This allows the operator to use lower cost materials of construction.

The high surface area by the direct contact between the produced water and liquid nitrogen results in a greater heat transfer coefficient.

The design per the present invention allows for no pretreatment of the produced water before being treated in the crystallizer.

The present invention further provides for the recovery of salts in near pure form allowing for their reuse or sale for use in other applications.

The present invention provides for a modular and movable crystallizer allowing for the unit to be moved to where there is a need to treat produced water.

The present invention further provides a high turn down ratio or TDR. This reflects the maximum capacity to minimum capacity in terms of flow so a unit with good TDR is desirable as when the feed flow changes the unit can adjust and still perform the desired work without upset the operability of the unit.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1 as well as on claim 6; further improvements, features and advantages of the present invention are explained below in more detail with reference to particular and preferred embodiments by way of non-limiting example and to the appended drawing figure taken in conjunction with the following description of exemplary embodiments, of which:

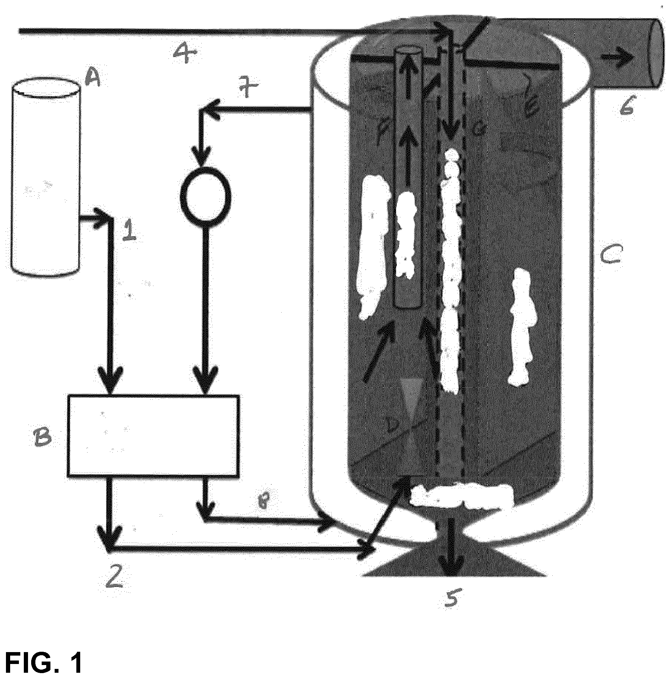

FIG. 1 is a schematic of a crystallizer according to the present invention, said crystallizer being used in and/or working according to the method of the present invention.

### Detailed description of the drawings;

### best way of embodying the present invention

Before explaining the inventive embodiments in detail, it is to be understood that the present invention is not limited in its application to the details of construction and arrangement of parts illustrated in the accompanying drawings, since the present invention is capable of other embodiments and being practiced or carried out in various ways. Also, it is to be understood that the phraseology or terminology employed herein is for the purpose of description and not of limitation.

In the description above and below, terms such as horizontal, upright, vertical, above, below, beneath and the like, are used solely for the purpose of clarity illustrating the present invention and should not be taken as words of limitation. The drawings are for the purpose of illustrating the present invention and are not intended to be to scale.

A crystallizer is shown in FIG. 1 as well as a schematic of the operation of the crystallizer in the method of the present invention. Produced water from an oil and gas production process is fed through line 4 to a porous pipe G which will distribute the produced water throughout the chamber C.

Liquid nitrogen (LIN) is fed from a liquid nitrogen (LIN) source A through line 1 to a fluid temperature control system B which will cool the liquid nitrogen (LIN) and form gaseous nitrogen (GAN). Such a system may be a CUMULUS system available from Linde AG. The gaseous nitrogen (GAN) is fed from the fluid temperature control system B through line 2 to the chamber C where it will enter a nozzle D.

The nozzle D will also be in fluid communication with the produced water present in chamber C and will direct the produced water and gaseous nitrogen (GAN) to an interior pipe F where they will form slush or ice crystals in the interior pipe F. This slush or ice crystals will be forced through the top of the interior pipe F where they can be recovered as fresh water from the chamber C through line 6.

The gaseous nitrogen (GAN) will be recovered from the top of the chamber C where it will be fed through line 7 to the fluid temperature control system B where it can then be cooled in temperature and fed through line 8 back to the chamber C and nozzle D.

A scraper E is mounted circumferentially around the porous pipe G. The scraper E will have arms extending outwards from its center and these arms will contact at least a portion of the height of the interior wall of the chamber C. This scraper E will be driven by an electric motor or exhaust gaseous nitrogen.

This scraper E will be operated periodically and the arms will contact salts that have formed on the interior walls of the chamber C. These salts are the byproducts of contaminants present in the produced water and will be separated out as a result of the operation of the crystallizer.

The salts will be removed from the bottom of the chamber C through line 5 where they can be recovered, purified further as necessary and reused in suitable industrial operations or disposed of in an environmentally responsible manner.

It will be understood that the embodiments described herein are merely exemplary, and that one skilled in the art may make variations and modifications without departing from the spirit and scope of the present invention. All such variations and modifications are intended to be included within the scope of the present invention as described and claimed herein. Further, all embodiments disclosed are not necessarily in the alternative, as various embodiments of the present invention may be combined to provide the desired result.

### List of reference signs

- 1: line or pipe or tube from liquid nitrogen (LIN) source A to fluid temperature control system B
- 2: line or pipe or tube from fluid temperature control system B to chamber C
- 4: line or pipe or tube for feeding or introducing produced water
- 5: line or pipe or tube for removing salts from bottom of chamber C
- 6: line or pipe or tube for recovering fresh water
- 7: line or pipe or tube from chamber C to fluid temperature control system B
- 8: line or pipe or tube from fluid temperature control system B to chamber C and to nozzle D
- A: liquid nitrogen (LIN) source
- B: fluid temperature control system
- C: chamber
- D: nozzle
- E: scraper
- F: interior pipe
- G: porous pipe

## Claims

1. A crystallizer comprising
- a chamber (C) being cylindrical in shape and comprising an interior wall and a top and a bottom, the chamber (C) being in fluid communication with a pipe (4) for introducing produced water, the pipe (4) being in fluid communication with a porous pipe (G) to allow for distribution of the produced water through the interior of the chamber (C);
- a source of gaseous nitrogen (GAN) in fluid communication with a nozzle (D) wherein the nozzle (D) is located inside the chamber (C) and is in fluid communication with an interior pipe (F) which is further in fluid communication with the produced water;
- at least one scraper (E) which is mounted circumferentially about the porous pipe (G) and has arms that extend outwardly from the scraper (E) center in contact with the interior wall of the chamber (C) thereby scraping salt crystals on the interior wall of the chamber (C); and
- a top pipe in fluid communication with the chamber (C) thereby to remove fresh water from the chamber (C).

2. The crystallizer according to claim 1 wherein the gaseous nitrogen (GAN) is formed by feeding liquid nitrogen (LIN) to a fluid temperature control system (B).

3. The crystallizer according to claim 2 wherein gaseous nitrogen (GAN) is recovered from the chamber (C).

4. The crystallizer according to claim 3 wherein the gaseous nitrogen (GAN) is fed to the fluid temperature control system (B).

5. The crystallizer according to at least one of claims 1 to 4 having salt removal means, in particular salt crystal removal means, from the bottom of the chamber (C), in particular for recovering, for being purified further and/or for being reused or disposed of.

6. A method for treating produced water, comprising the steps of:
a) feeding (4) produced water to a porous pipe (G) in a chamber (C) wherein the chamber (C) is cylindrically shaped having an interior wall with a top and a bottom;
b) feeding gaseous nitrogen (GAN) to a nozzle (D) present in the chamber (C), wherein the nozzle (D) is in fluid communication with an interior pipe (F);
c) feeding the produced water to the interior pipe (F) wherein slush is formed in the interior pipe (F) and this slush is forced through the interior pipe (F) to the top of the chamber (C);
d) operating at least one scraper (E) which is mounted circumferentially about the porous pipe (G) and has arms that extend outwardly from the scraper (E) center in contact with the interior wall of the chamber (C) wherein the scraper (E) will contact and remove salt crystals from the interior walls of the chamber (C);
e) recovering salts, in particular salt crystals, from the bottom of the chamber (C); and
f) recovering fresh water from the chamber (C).

7. The method according to claim 6 wherein the produced water is from an oil and gas production process.

8. The method according to claim 6 or 7 wherein the porous pipe (G) distributes the produced water throughout the chamber (C).

9. The method according to at least one of claims 6 to 8 wherein the nozzle (D) feeds the produced water and gaseous nitrogen (GAN) to the interior pipe (F).

10. The method according to at least one of claims 6 to 9 wherein slush or ice crystals are formed in the interior pipe (F).

11. The method according to at least one of claims 6 to 10 wherein the scraper (E) is operated periodically.

12. The method according to at least one of claims 6 to 11 wherein the scraper (E) rotates between 0 degree and 180 degree.

13. The method according to at least one of claims 6 to 12 wherein the scraper (E) is driven by an electric motor or through exhaust gaseous nitrogen (GAN).

14. The method according to at least one of claims 6 to 13 wherein the salts are removed from the bottom of the chamber (C) for recovering, purifying further and/or reusing or disposing of.

15. The method according to at least one of claims 6 to 14 wherein the fresh water is recovered from the chamber (C) through a top pipe.
